# EUROPÄISCHE PATENTANMELDUNG

(11) **EP 4 456 615 A1**
(43) Veröffentlichungstag der Anmeldung: **30.10.2024**
(21) Anmeldenummer: 23170247.3
(22) Anmeldetag: 27.04.2023
(51) Int. Cl.: H04W 52/24, H04W 52/14, H04W 52/36

(54) **SICHERES BETRIEBSVERFAHREN EINER BASISSTATION EINES MOBILFUNKNETZES**

(71) Anmelder: Deutsche Telekom AG, 53113 Bonn (DE)
(72) Erfinder: REESE, Roland, 64283 Darmstadt (DE); RADERMACHER, Eva, 50678 Köln (DE)
(74) Vertreter: RDL Patentanwälte PartG mbB

(57) **Zusammenfassung**

Verfahren zum Betreiben einer Basisstation eines Mobilfunknetzes, bei dem eine Basisstation mit einer Sendeleistung betrieben wird, die Basisstation ein Funksignal sendet und ein mobiler Transceiver das gesendete Funksignal empfängt, und der mobile Transceiver eine Signalstärke des empfangenen Funksignals misst und einen zu der gemessenen Signalstärke korrespondierenden Signalstärkewert ermittelt, sowie Basisstation für ein Mobilfunknetz und Computerprogrammprodukt für eine Basisstation.

## Beschreibung

Die Erfindung betrifft ein Verfahren zum Betreiben einer Basisstation eines Mobilfunknetzes, bei dem eine Basisstation mit einer Sendeleistung betrieben wird, die Basisstation ein Funksignal sendet und ein mobiler Transceiver das gesendete Funksignal empfängt, und der mobile Transceiver eine Signalstärke des empfangenen Funksignals misst und einen zu der gemessenen Signalstärke korrespondierenden Signalstärkewert ermittelt. Ferner betrifft die Erfindung eine Basisstation für ein Mobilfunknetz und ein Computerprogrammprodukt für eine Basisstation.

Verfahren der eingangs genannten Art gehören in unterschiedlichen Ausgestaltungen zum Stand der Technik und dienen dazu, eine von der Basisstation verursachte und von der Sendeleistung der Basisstation, base transceiver station, BTS, abhängige elektromagnetische Feldstärke an einem Ort des mobilen Transceivers zu ermitteln. Der mobile Transceiver ermittelt die elektromagnetische Feldstärke, kurz Feldstärke, durch Messen der Signalstärke des von der Basisstation gesendeten Funksignals.

Unter dem mobilen Transceiver wird jedes portable, d.h. nicht ortsfeste, elektronische Gerät verstanden, das konfiguriert ist, drahtlos zu kommunizieren, d.h. Funksignale zu empfangen und zu senden. Wenn eine Person den mobilen Transceiver mit sich führt, ermittelt der Transceiver zugleich die elektromagnetische Feldstärke an dem Ort der Person.

Rechtliche Vorschriften bestimmen, dass Personen vor einer gesundheitsschädlichen elektromagnetischen Feldstärke zu schützen sind, und definieren einen zulässigen Maximalwert der elektromagnetischen Feldstärke, der im Folgenden als ein vorbestimmter Grenzwert bezeichnet wird. Zu dem zulässigen Maximalwert korrespondiert eine Umgebung der Basisstation, innerhalb derer die elektromagnetische Feldstärke gesundheitsschädlich sein kann. Um einen Aufenthalt von Personen in der Umgebung auszuschließen, muss die Umgebung in vielen praktischen Fällen mittels kostspieliger baulicher Maßnahmen für Personen unzugänglich gemacht werden.

Wenn eine Person aus betrieblichen Gründen, beispielsweise für eine Wartung, Reparatur, Erweiterung oder Aktualisierung der Basisstation, die Umgebung betreten muss, muss die Basisstation manuell oder automatisch, beispielsweise aufgrund eines sensorischen Erfassens der in der Umgebung angeordneten Person, für eine Dauer der Maßnahme abgeschaltet werden, was mit einer Beeinträchtigung von Nutzern der Basisstation einhergeht.

Es ist daher eine Aufgabe der Erfindung, ein Verfahren zum Betreiben einer Basisstation eines Mobilfunknetzes vorzuschlagen, das einerseits den rechtlichen Vorgaben genügt und andererseits ohne kostspielige bauliche Maßnahmen ein Beeinträchtigen von Nutzern der Basisstation vermeidet oder zumindest stark verringert. Weitere Aufgaben der Erfindung sind, eine Basisstation für ein Mobilfunknetz und ein Computerprogrammprodukt für eine Basisstation bereitzustellen.

Ein Gegenstand der Erfindung ist ein Verfahren zum Betreiben einer Basisstation eines Mobilfunknetzes, bei dem eine Basisstation mit einer Sendeleistung betrieben wird, die Basisstation ein Funksignal sendet und ein mobiler Transceiver das gesendete Funksignal empfängt, und der mobile Transceiver eine Signalstärke des empfangenen Funksignals misst und einen zu der gemessenen Signalstärke korrespondierenden Signalstärkewert ermittelt. Der ermittelte Signalstärkewert korrespondiert zu einer von der Basisstation mittels der gesendeten Funksignale an einem Ort des mobilen Transceivers bereitgestellten elektromagnetischen Feldstärke. In vielen Fällen zeigt der mobile Transceiver den ermittelten Signalstärkewert einem Nutzer des mobilen Transceivers an, insbesondere mittels einer Mehrzahl von Balken. Erfindungsgemäß sendet der mobile Transceiver den ermittelten Signalstärkewert, empfängt die Basisstation den gesendeten Signalstärkewert, ermittelt die Basisstation abhängig von dem empfangenen Signalstärkewert einen Feldstärkewert am Ort des mobilen Transceivers und stellt die Basisstation die Sendeleistung abhängig von dem ermittelten Feldstärkewert ein. Infolgedessen kennt die Basisstation den von dem mobilen Transceiver ermittelten Signalstärkewert und ermittelt anhand des empfangenen Signalstärkewerts den Feldstärkewert am Ort des mobilen Transceivers. Durch das Einstellen der Sendeleistung kann die Basisstation die elektromagnetische Feldstärke am Ort des mobilen Transceivers, insbesondere einer den mobilen Transceiver mit sich führenden Person, steuern.

Die Steuerung kann derart erfolgen, dass der Betrieb der Basisstation auch dann mit geltenden Vorschriften zum Gesundheitsschutz konform ist, wenn die den mobilen Transceiver mit sich führende Person innerhalb der üblicherweise aufgrund baulicher Maßnahmen unzugänglichen Umgebung der Basisstation angeordnet ist. Die kostspieligen baulichen Maßnahmen können entfallen.

Bevorzugt sendet die Basisstation ein Referenzsignal als das Funksignal.- Das Referenzsignal wird von der Basisstation ohnehin zum Synchronisieren des mobilen Transceivers mit der Basisstation gesendet. Beispielsweise kann die Basisstation ein Channel State Information-Reference Signal (CSI-RS) oder ein Sounding Reference Signal (SRS) als das Referenzsignal senden. Der mobile Transceiver kann einen Reference Signal Received Power (RSRP)-Wert als den Signalstärkewert ermitteln. Der mobile Transceiver kann ohnehin zum Ermitteln des RSRP-Werts ausgebildet sein. In diesem Fall brauchen diesbezüglich weder die Basisstation noch der mobile Transceiver für das erfindungsgemäße Verfahren weitergebildet zu werden.

Ein mobiles Endgerät oder ein Exposimeter kann als der mobile Transceiver empfangen, ermitteln und senden. Das mobile Endgerät ist beispielsweise als ein Smartphone oder ein Tablet ausgebildet. Ein vorhandenes Exposimeter kann auf einfache Weise mit einer Sende-/Empfangseinrichtung versehen werden.

Vorteilhaft umfasst das Einstellen der Antennenleistung ein Reduzieren der Sendeleistung oder ein Abschalten der Basisstation. Die Sendeleistung wird derart reduziert, dass eine Gesundheitsgefahr für eine den mobilen Transceiver mit sich führende Person ausgeschlossen ist. Nur bei einer extremen Annäherung der Person an eine Antenne der Basisstation muss die Basisstation abgeschaltet werden, um die Gesundheitsgefahr auszuschließen.

Idealerweise umfasst das Reduzieren der Sendeleistung ein Regeln der Sendeleistung derart, dass der ermittelte Feldstärkewert einen vorbestimmten Grenzwert unterschreitet. Der vorbestimmte Grenzwert kann in einer geltenden Vorschrift bestimmt sein. Die bidirektionale Kommunikation zwischen der das Funksignal sendenden Basisstation und dem den ermittelten Signalstärkewert sendenden mobilen Transceiver etabliert einen Regelkreis für die von der Basisstation bereitgestellte Sendeleistung. Wenn der ermittelte Feldstärkewert größer als der vorbestimmte Grenzwert ist, kann die Basisstation die Sendeleistung schrittweise so lange reduzieren, bis der ermittelte Feldstärkewert den vorbestimmten Grenzwert unterschreitet.

Wenn die Basisstation eine massive MIMO (Multiple Input Multiple Output)-Antenne oder eine Beamforming-Antenne umfasst, kann das Reduzieren der Sendeleistung auch auf einen bestimmten Raumwinkelbereich beschränkt werden. In diesem Fall wird die für den komplementären Raumwinkelbereich bereitgestellte Sendeleistung unverändert beibehalten, wodurch ein unnötiges Beeinträchtigen von Nutzern vermieden wird.

Bevorzugt ermittelt die Basisstation den Feldstärkewert abhängig von einem bestimmten Antennenfaktor des mobilen Transceivers. Der Antennenfaktor ist ein Maß für die Fähigkeit der Antenne des mobilen Transceivers, das von der Basisstation gesendete Funksignal zu empfangen, d.h. ein Maß für die Empfangsstärke der Antenne des mobilen Transceivers. Der Antennenfaktor ermöglicht ausgehend von der gemessenen Signalstärke bzw. dem ermittelten Signalstärkewert ein Berechnen der elektromagnetischen Feldstärke am Ort des mobilen Transceivers, die jeweils zu einer Empfangsleistung des Transceivers korrespondieren.

In einer Ausführungsform kann der mobile Transceiver den Antennenfaktor senden und kann die Basisstation den gesendeten Antennenfaktor empfangen und den empfangenen Antennenfaktor als den Antennenfaktor des mobilen Transceivers bestimmen. Der mobile Transceiver speichert den Antennenfaktor und kann den gespeicherten Antennenfaktor zusammen mit dem ermittelten Signalstärkewert senden. Die Basisstation empfängt den gesendeten Antennenfaktor zusammen mit dem empfangenen Signalstärkewert.

In einer weiteren Ausführungsform kann der mobile Transceiver einen Identifikator senden und kann die Basisstation den gesendeten Identifikator empfangen und den Antennenfaktor des mobilen Transceivers anhand des empfangenen Identifikators bestimmen. In diesem Fall speichert die Basisstation eine Tabelle mit einer Mehrzahl von Zuordnungen. Jede Zuordnung ordnet einem Identifikator genau einen Antennenfaktor zu. Der mobile Transceiver braucht den Antennenfaktor nicht zu speichern.

Alternativ oder zusätzlich kann die Basisstation einen generischen Antennenfaktor als den Antennenfaktor des mobilen Transceivers bestimmen. Für den Fall, dass der mobile Transceiver weder den Antennenfaktor noch den Identifikator sendet oder die Basisstation infolge außergewöhnlicher Umstände weder den Antennenfaktor noch den Identifikator empfängt, kann die Basisstation den generischen Antennenfaktor zum Ermitteln des Feldstärkewerts verwenden. Der generische Antennenfaktor ist für eine Vielzahl von mobilen Transceivern geeignet und entspricht einem kleinsten Antennenfaktor der vielen mobilen Transceiver. In den meisten Fällen ermittelt die Basisstation unter Verwendung des generischen Antennenfaktors einen zu großen Feldstärkewert. Der zu gro-βe Feldstärkewert bewirkt zwar eine Verringerung der Sendeleistung weit unter den vorbestimmten Grenzwert, stellt aber die Konformität mit geltenden Vorschriften und den Gesundheitsschutz sicher.

Noch ein Gegenstand der Erfindung ist eine Basisstation für ein Mobilfunknetz, die eine Antenne und eine mit der Antenne verbundene Rechenvorrichtung umfasst. Derartige Basisstationen sind weit verbreitet und werden abhängig von einer Generation des Mobilfunknetzes unterschiedlich bezeichnet, beispielsweise als "nodeB" (Universal Mobile Telecommunications System, UMTS) oder "gNB" (next generation NodeB, 5G).

Erfindungsgemäß ist die Basisstation konfiguriert, zusammen mit einem mobilen Transceiver ein Verfahren nach einer Ausführungsform der Erfindung auszuführen. Die Basisstation gewährleistet durch Regeln der Sendeleistung einen Gesundheitsschutz für Personen, die einen mobilen Transceiver mit sich führen und sich der Basisstation nähern. Bauliche Maßnahmen zum Versperren eines Zugangs von Personen zu der Basisstation können entfallen ebenso wie in vielen Fällen ein manuelles oder automatisches Abschalten der Basisstation.

Ein weiterer Gegenstand der Erfindung ist ein Computerprogrammprodukt für eine Basisstation, umfassend ein digitales Speichermedium mit einem Programmcode. Das digitale Speichermedium kann eine CD (Compact Disc), eine DVD (Digital Versatile Disk), einen RAM (Random Access Memory)-Chip, einen USB (Universal Serial Bus)-Stick, eine Festplatte, einen Cloud-Speicher und dergleichen umfassen.

Erfindungsgemäß veranlasst der Programmcode eine Rechenvorrichtung, zusammen mit einem mobilen Transceiver ein Verfahren nach einer Ausführungsform der Erfindung als die Basisstation auszuführen, wenn der Programmcode von einem Prozessor der Rechenvorrichtung ausgeführt wird. Der Programmcode kann die Basisstation aktualisieren und durch die Aktualisierung erfindungsgemäß konfigurieren. Die aktualisierte Basisstation gewährleistet ohne kostspielige bauliche Maßnahmen einen vorgeschriebenen Gesundheitsschutz von Personen und vermeidet ein Beeinträchtigen von Nutzern der Basisstation infolge eines Abschaltens der Basisstation oder verringert eine solche Beeinträchtigung zumindest stark.

Ein wesentlicher Vorteil des erfindungsgemäßen Verfahrens besteht darin, dass eine Basisstation kostengünstig, vorschriftenkonform und mit geringstmöglicher Beeinträchtigung von Nutzern der Basisstation betrieben wird.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im Folgenden unter Bezugnahme auf die Zeichnungen ausführlich beschrieben. Es zeigt
- Fig. 1: in einem Entitätendiagramm eine Basisstation nach einer Ausführungsform der Erfindung für ein Mobilfunknetz;
- Fig. 2: in einem Entitätendiagramm die in Fig. 1 gezeigte Basisstation mit zwei unterschiedlich eingestellten Sendeleistungen.

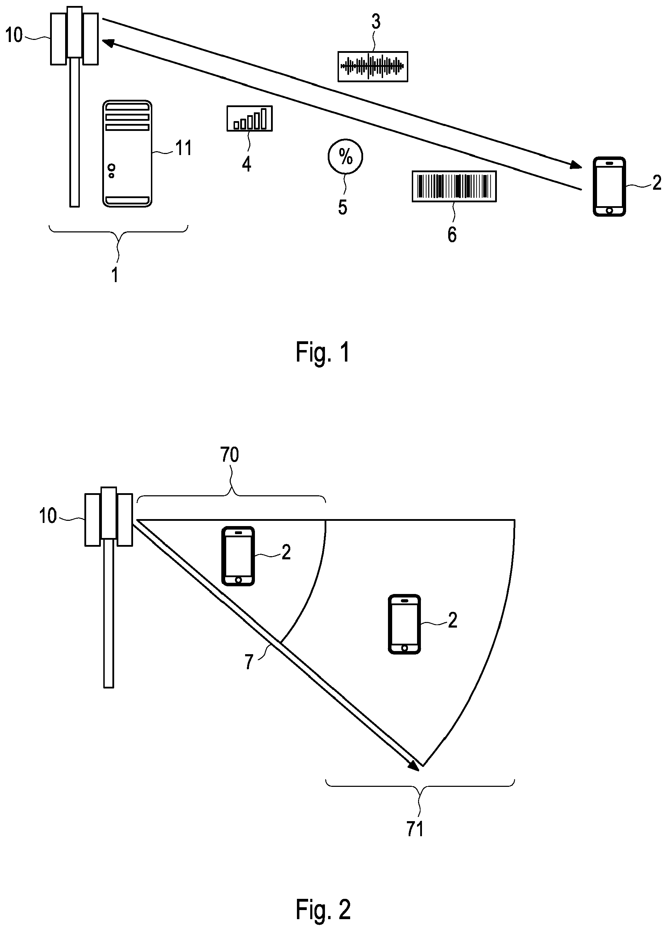

Fig. 1 zeigt in einem Entitätendiagramm eine Basisstation 1 nach einer Ausführungsform der Erfindung für ein Mobilfunknetz. Die Basisstation 1 umfasst eine Antenne 10 und eine mit der Antenne 10 verbundene Rechenvorrichtung 11 und ist konfiguriert, zusammen mit einem mobilen Transceiver 2 ein nachfolgend beschriebenes Verfahren nach einer Ausführungsform der Erfindung auszuführen.

Beispielsweise kann die Rechenvorrichtung 11 der Basisstation 1 ein Computerprogrammprodukt umfassen. Das Computerprogrammprodukt umfasst ein digitales Speichermedium mit einem Programmcode. Der Programmcode veranlasst die Rechenvorrichtung 11, zusammen mit dem mobilen Transceiver 2 das folgende Verfahren als die Basisstation 1 auszuführen, wenn der Programmcode von einem Prozessor der Rechenvorrichtung 11 ausgeführt wird.

Die Basisstation wird mit einer Sendeleistung betrieben.

Die Basisstation 1 sendet ein Funksignal 3, und der mobile Transceiver 2 empfängt das gesendete Funksignal 3. Bevorzugt sendet die Basisstation 1 ein Referenzsignal als das Funksignal 3.

Der mobile Transceiver 2 misst eine Signalstärke des empfangenen Funksignals 3, ermittelt einen zu der gemessenen Signalstärke korrespondierenden Signalstärkewert 4 und sendet den ermittelten Signalstärkewert 4. Bevorzugt ermittelt der mobile Transceiver 2 einen Reference Signal Received Power (RSRP)-Wert als den Signalstärkewert 4.

Beispielsweise kann ein mobiles Endgerät oder ein Exposimeter als der mobile Transceiver 2 empfangen, ermitteln und senden.

Die Basisstation 1 empfängt den gesendeten Signalstärkewert 4 und ermittelt abhängig von dem empfangenen Signalstärkewert 4 einen Feldstärkewert am Ort des mobilen Transceivers 2. Idealerweise ermittelt die Basisstation 1 den Feldstärkewert abhängig von einem bestimmten Antennenfaktor 5 des mobilen Transceivers 2.

Der mobile Transceiver 2 kann den Antennenfaktor 5 senden. Die Basisstation 1 kann den gesendeten Antennenfaktor 5 empfangen und den empfangenen Antennenfaktor 5 als den Antennenfaktor 5 des mobilen Transceivers 2 bestimmen.

Der mobile Transceiver 2 kann alternativ einen Identifikator 6 senden. Die Basisstation 1 kann den gesendeten Identifikator 6 empfangen und den Antennenfaktor 5 des mobilen Transceivers 2 anhand des empfangenen Identifikators 6 bestimmen.

Wenn die Basisstation 1 weder den gesendeten Antennenfaktor 5 noch den gesendeten Identifikator 6 empfängt, kann die Basisstation 1 einen generischen Antennenfaktor als den Antennenfaktor 5 des mobilen Transceivers 2 bestimmen.

Die Basisstation stellt die Sendeleistung abhängig von dem ermittelten Feldstärkewert ein. Das Einstellen der Antennenleistung umfasst vorteilhaft ein Reduzieren der Sendeleistung oder ein Abschalten der Basisstation 1. Das Reduzieren der Sendeleistung kann ein Regeln der Sendeleistung derart umfassen, dass der ermittelte Feldstärkewert einen vorbestimmten Grenzwert unterschreitet.

Fig. 2 zeigt in einem Entitätendiagramm die in Fig. 1 gezeigte Basisstation 1 mit zwei unterschiedlichen eingestellten Sendeleistungen. Wenn ein Abstand 7 des Transceivers 2 von der Antenne 10 der Basisstation 1 in einem ersten Bereich liegt, d.h. der Transceiver 2 in einem ersten Abstandsbereich 70 angeordnet ist, verringert die Basisstation 1 die Sendeleistung, bis die ermittelte, d.h. an dem Ort des Transceivers 2 bereitgestellte, Feldstärke geringer ist als der vorbestimmte Grenzwert.

Wenn der Abstand 7 des Transceivers 2 von der Antenne 10 der Basisstation in einem an den ersten Bereich anschließenden zweiten Bereich liegt, d.h. der Transceiver 2 in einem an den ersten Abstandsbereich 70 anschließenden zweiten Abstandsbereich 71 angeordnet ist, verringert die Basisstation 1 die Sendeleistung nicht, da die ermittelte, d.h. an dem Ort des Transceivers 2 bereitgestellte, Feldstärke geringer ist als der vorbestimmte Grenzwert.

### Bezugszeichenliste

- 1: Basisstation
- 10: Antenne
- 11: Rechenvorrichtung
- 2: mobiler Transceiver
- 3: Funksignal
- 4: Signalstärkewert
- 5: Antennenfaktor
- 6: Identifikator
- 7: Abstand
- 70: erster Abstandsbereich
- 71: zweiter Abstandsbereich

## Patentansprüche

1. Verfahren zum Betreiben einer Basisstation (1) eines Mobilfunknetzes, bei dem
- eine Basisstation (1) mit einer Sendeleistung betrieben wird;
- die Basisstation (1) ein Funksignal (3) sendet und ein mobiler Transceiver (2) das gesendete Funksignal (3) empfängt;
- der mobile Transceiver (2) eine Signalstärke des empfangenen Funksignals (3) misst, einen zu der gemessenen Signalstärke korrespondierenden Signalstärkewert (4) ermittelt und den ermittelten Signalstärkewert (4) sendet;
- die Basisstation (1) den gesendeten Signalstärkewert (4) empfängt, abhängig von dem empfangenen Signalstärkewert (4) einen Feldstärkewert am Ort des mobilen Transceivers (2) ermittelt und die Sendeleistung abhängig von dem ermittelten Feldstärkewert einstellt.

2. Verfahren nach Anspruch 1, bei dem die Basisstation (1) ein Referenzsignal als das Funksignal (3) sendet.

3. Verfahren nach Anspruch 1 oder 2, bei dem ein mobiles Endgerät oder ein Exposimeter als der mobile Transceiver (2) empfängt, ermittelt und sendet.

4. Verfahren nach einem der Ansprüche 1 bis 3, bei dem das Einstellen der Antennenleistung ein Reduzieren der Sendeleistung oder ein Abschalten der Basisstation (1) umfasst.

5. Verfahren nach Anspruch 4, bei dem das Reduzieren der Sendeleistung ein Regeln der Sendeleistung derart umfasst, dass der ermittelte Feldstärkewert einen vorbestimmten Grenzwert unterschreitet.

6. Verfahren nach einem der Ansprüche 1 bis 5, bei dem die Basisstation (1) den Feldstärkewert abhängig von einem bestimmten Antennenfaktor (5) des mobilen Transceivers (2) ermittelt.

7. Verfahren nach Anspruch 6, bei dem der mobile Transceiver (2) den Antennenfaktor (5) sendet und die Basisstation (1) den gesendeten Antennenfaktor (5) empfängt und den empfangenen Antennenfaktor (5) als den Antennenfaktor (5) des mobilen Transceivers (2) bestimmt, oder bei dem der mobile Transceiver (2) einen Identifikator (6) sendet und die Basisstation (1) den gesendeten Identifikator (6) empfängt und den Antennenfaktor (5) des mobilen Transceivers (2) anhand des empfangenen Identifikators (6) bestimmt.

8. Verfahren nach Anspruch 6, bei dem die Basisstation (1) einen generischen Antennenfaktor als den Antennenfaktor (5) des mobilen Transceivers (2) bestimmt.

9. Basisstation (1) für ein Mobilfunknetz, die eine Antenne (10) und eine mit der Antenne (10) verbundene Rechenvorrichtung (11) umfasst und konfiguriert ist, zusammen mit einem mobilen Transceiver (2) ein Verfahren nach einem der Ansprüche 1 bis 8 auszuführen.

10. Computerprogrammprodukt für eine Basisstation (1), umfassend ein digitales Speichermedium mit einem Programmcode, der eine Rechenvorrichtung (11) veranlasst, zusammen mit einem mobilen Transceiver (2) ein Verfahren nach einem der Ansprüche 1 bis 8 als die Basisstation (1) auszuführen, wenn der Programmcode von einem Prozessor der Rechenvorrichtung (11) ausgeführt wird.
